# EUROPÄISCHE PATENTSCHRIFT

(11) **EP 2 015 426 B1**
(45) Veröffentlichungstag und Bekanntmachung des Hinweises auf die Patenterteilung: **31.08.2011**
(21) Anmeldenummer: 08104022.2
(22) Anmeldetag: 20.05.2008
(51) Int. Cl.: H02K 9/06, H02K 7/14

(54) **Antriebsvorrichtung für ein Handwerkzeuggerät**
Drive device for a hand tool
Dispositif de propulsion pour un outil manuel

(30) Priorität: 10.07.2007 DE 102007000372
(43) Veröffentlichungstag der Anmeldung: 14.01.2009
(73) Patentinhaber: HILTI Aktiengesellschaft, 9494 Schaan (LI)
(72) Erfinder: Riedl, Reinhard, 86923 Finning (DE); Pritzen, Thomas, 86199 Inningen (DE); Luettich, Torsten, 86916 Kaufering (DE)
(74) Vertreter: Wildi, Roland

(56) Entgegenhaltungen:
- CH-A- 315 437
- DE-U1- 29 521 011
- DE-U1-202006 008 332
- JP-A- 11 018 331
- JP-A- 2007 089 311

## Beschreibung

Die Erfindung betrifft ein handgeführtes Elektrogerät, insbesondere ein Handwerkzeuggerät, wie ein Schraub-, Bohr-, Meissel- oder Kombigerät, mit einer Antriebsvorrichtung, wie beispielsweise einem bürstenlosen Motor, mit den Merkmalen gemäss dem Oberbegriff von Patentanspruch 1 und wie aus DE 295 21 011 U1 bekannt. Dabei weist die Antriebsvorrichtung einen in einem Antriebsgehäuse untergebrachten Stator mit einer Längserstreckung zwischen zwei axialen Statorenden auf. Dabei ist an beiden Statorenden jeweils ein Abschlusselement angeordnet, das als Lagerschild oder als Deckelelement ausgebildet sein kann. Ferner umfasst die Antriebsvorrichtung einen Rotor, der wenigstens einen Permanentmagnet aufweist. Der Rotor ist in einem durch den Stator und die Abschlusselemente begrenzten Aufnahmeraum angeordnet und über eine Antriebsachse an den Abschlusselementen drehgelagert. Ferner ist ein Lüfter vorgesehen, der mit der Antriebsachse bewegungsgekoppelt ist. Mittels dieses Lüfters ist zwischen einer Gehäuseinnenfläche des Antriebsgehäuses und einer Statoraussenfläche ein Kühlluftstrom entlang der Längserstreckung des Stators von einem der Statorenden zu dem jeweils anderen Statorende erzeugbar.

Aus JP 11 018331 und JP2007 089311 sind Elektromotoren mit Isolationskappen bekannt, welche auf die axialen Stirnenden eines Stator aufgesteckt sind.

Bei derartigen Antriebsvorrichtungen wird durch die im Wesentlichen vollständige Kapselung des Aufnahmeraumes durch den Stator und die Abschlusselemente verhindert, dass metallische Partikel, die im Kühlluftstrom mitgeführt werden, in den Aufnahmeraum gelangen und sich dort in schadhafter Menge am Permanentmagneten ansammeln. Die Kühlung des Motors wird hierbei lediglich durch den aussen am Stator entlang streichenden Kühlluftstrom erzeugt.

Eine Antriebsvorrichtung ist aus der GB 2,293,282 A bekannt. Diese zeigt einen bürstenlosen Motor, bei dem der Rotor vollständig durch den umgebenden Stator sowie zwei an diesem angebrachte Lagerdeckel gekapselt ist. Dabei ist an einer vom Stator abgewandten Aussenseite eines der Lagerdeckel ein Lüfter vorgesehen, der einen an einer Aussenfläche des Stators vorbei streichenden Kühlluftstrom erzeugt. Hierbei bilden die Lagerdeckel zusammen mit dem Stator eine gemeinsame Aussenfläche aus, in die mehrere Längsnuten eingelassen sind, die mehrere sich über die Länge der Anordnung aus Lagerdeckeln und Stator erstreckende Kühlrippen bilden.

Nachteilig an der bekannten Antriebsvorrichtung ist, dass die Kühlwirkung des hier erzeugten Kühlluftstromes relativ gering ist, was dazu führt, dass entweder die Leistung der Antriebsvorrichtung relativ gering gehalten werden muss oder ein relativ starker Lüfter verwendet werden muss.

Der vorliegenden Erfindung liegt die Aufgabe zugrunde, bei einer gattungsgemässen Antriebsvorrichtung die genannten Nachteile zu vermeiden und eine bessere Kühlwirkung zu erzielen.

Erfindungsgemäss wird diese Aufgabe durch eine Antriebsvorrichtung mit den Merkmalen von Patentanspruch 1 gelöst, wobei an der Statoraussenfläche mehrere Prallflächen ausgebildet sind, die sich quer zur Längserstreckung des Stators erstrecken. Auf diese Weise werden an der Statoraussenfläche Umleitungen und Verwirbelungen des Kühlluftstromes erzeugt die eine Verlängerung des Strömungspfades und einen verbesserten Wärmeaustausch zwischen dem Stator und dem Kühlluftstrom zur Folge haben.

Erfindungsgemäß sind an der Statoraussenfläche mehrere Längsrippen vorgesehen, die sich parallel zur Längserstreckung des Stators erstrecken. Die Prallfläche sind dabei durch Ausnehmungen an den Längsrippen gebildet. Hierdurch können die Prallflächen in besonders einfacher Weise an Längsrippen ausgebildet werden, die beispielsweise als Kühlrippen oder Stützelemente fungieren.

Vorteilhafterweise sind mehrere benachbarte Längsrippen vorgesehen, an denen die Prallflächen bezüglich der Längserstreckung des Stators zueinander versetzt angeordnet sind. Hierdurch kann der Kühlluftstrom zwischen den beiden Statorenden mehrfach umgeleitet beziehungsweise verwirbelt werden, was einen besonders guten Wärmeaustausch zwischen der Statoraussenfläche und dem Kühlluftstrom und damit eine höhere Abkühlung des Stators bewirkt.

Bevorzugterweise weist der Stator mehrere Wicklungsnuten mit jeweils einer darin angeordneten Nutisolation auf, die sich höchstens über die halbe Längserstreckung des Stators erstreckt. Auf diese Weise kann eine Störung der Wärmeleitung in Folge der Nutisolation an zum Rotor benachbarten Bereichen des Stators minimiert werden. Hierdurch kann mit dem lediglich an der Statoraussenfläche entlang streichenden Kühlluftstrom eine ausreichende Kühlwirkung des gesamten Stators sicher gestellt werden.

Vorteilhafterweise weist der Stator eine auf mehreren Stegen gehaltene Statorwicklung auf, wobei durch die Statorwicklung und die Stege gebildete Zwischenräume bereichsweise mit einem wärmeleitfähigen Material ausgegossen sind. Hierdurch kann ein guter Wärmeübergang von der Statorwicklung auf ein Statorpaket sicher gestellt werden, wodurch auch eine ausreichende Kühlung der Statorwicklung sichergestellt werden kann.

Die Erfindung wird nachstehend anhand eines Ausführungsbeispieles näher erläutert. Es zeigen:
- Fig. 1: eine geschnittene Ansicht einer erfindungsgemässen Antriebsvorrichtung im vorderen Teil eines Handwerkzeuggerätes,
- Fig. 2: eine perspektivische Ansicht eines Stators der Antriebsvorrichtung nach Fig. 1 und
- Fig. 3: eine explodierte perspektivische Ansicht eines Statorpakets und einer Nutisolation des Stators nach Fig. 2.

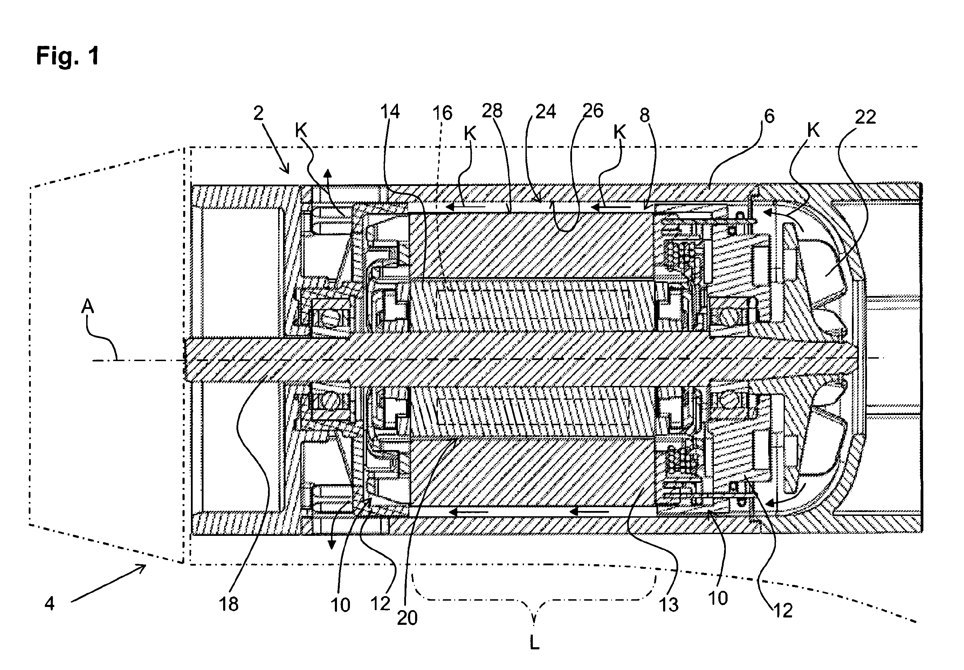

Fig. 1 zeigt eine Antriebsvorrichtung 2 eines lediglich angedeuteten Handwerkzeuggerätes 4, beispielhaft in Form eines Akkuschraubers. Die Antriebsvorrichtung 2 weist dabei ein Antriebsgehäuse 6 auf, in dem ein Stator 8 festgelegt ist. Dieser weist zwischen zwei axialen Statorenden 10, an denen jeweils ein Abschlusselement 12 angeordnet ist, ein Statorpaket 13 mit einer Längserstreckung L auf.

Die Längserstreckung L verläuft dabei parallel zu einer Antriebsachse A, um die herum ein Rotor 14 rotierbar ist, der mehrere Permanentmagneten 16 aufweist. Hierzu ist der Rotor 14 über eine Antriebsachse 18 verdrehbar an den jeweils als Lagerschild ausgebildeten Abschlusselementen 12 gelagert. Die Abschlusselemente 12 bilden dabei zusammen mit dem Stator 8 einen zur Aufnahme des Rotors 14 dienenden Aufnahmeraum 20, der im Wesentlichen nach Aussen hin gekapselt ist. Hierzu können die Abschlusselemente 12 alternativ zu der gezeigten Ausbildung als Lagerschilder auch als blosse Deckel ausgebildet sein.

Durch die zumindest weitestgehende Kapselung wird ein Eintritt von magnetisierbaren Partikeln in den Aufnahmeraum 20 verhindert, die sich hier in Folge der Anziehungskraft der Permanentmagneten am Rotor 14 anlagern und dadurch zu Störungen führen könnten.

Ferner ist ein Lüfter 22 drehfest mit der Antriebsachse A verbunden, der im Betrieb einen durch eine Pfeilschar K dargestellten Kühlluftstrom in einem Zwischenraum 24 erzeugt, der durch eine Gehäuseinnenfläche 26 des Antriebsgehäuses 6 und eine Statoraussenfläche 28 des Statorpakets 13 gebildet ist. Mittels dieses Kühlluftstromes K erfolgt dabei im Betrieb des Handwerkzeuggerätes 4 eine Abkühlung des Stators 8 an der Statoraussenfläche 28, die einen insbesondere in radialer Richtung wirksamen Temperaturgradienten zur Folge hat, der auch am Rotor 14 beziehungsweise in einem zum Rotor 14 benachbarten Bereich des Stators 8 eine Kühlwirkung hervorruft.

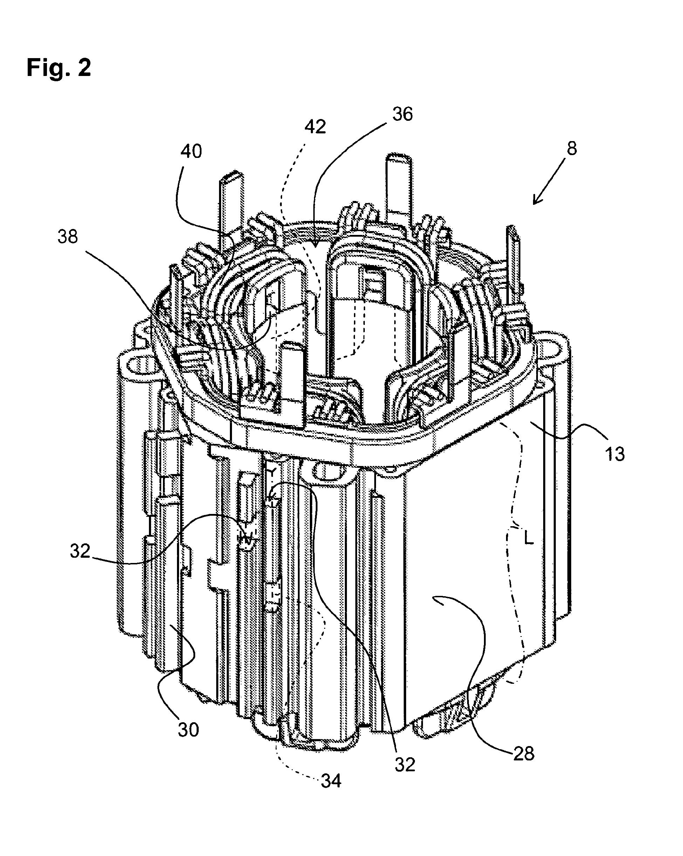

Um hierbei mittels des Kühlluftstromes K eine besonders hohe Kühlwirkung zu erzielen, sind, wie insbesondere aus Fig. 2 zu entnehmen ist, an der Statoraussenfläche 28 mehrere als Kühlrippen fungierende Längsrippen 30 ausgebildet. Diese können direkt am Statorpaket 13 ausgeformt sein oder auch durch eine nachträgliche Einarbeitung von entsprechenden Längsnuten erzeugt werden. In jedem Fall sorgen diese Längsrippen 30 für eine Vergrösserung der Statoraussenfläche 28, die einen erhöhten Wärmeaustausch zwischen dem Stator 8 und dem Kühlluftstrom K und damit eine erhöhte Kühlwirkung zur Folge hat.

Zudem sind an der Statoraussenfläche 28 mehrere Prallflächen 32 vorgesehen, die zwischen den axialen Statorenden 10 angeordnet sind und sich quer zur Längserstreckung L des Statorpakets 13 erstrecken. Die Prallflächen 32 sind dabei durch Ausnehmungen 34 an den Längsrippen 30 gebildet, wobei mehrere benachbarte Längsrippen 30 vorgesehen sind, an denen die Ausnehmungen 34 bezüglich der Längserstreckung L axial versetzt zueinander hergestellt sind.

Durch diese Prallflächen 32 werden im Betrieb Umleitungen und Verwirbelungen des Kühlluftstromes K erzeugt, die eine Verlängerung des Strömungsweges zwischen den Abschlusselementen 12 und eine verbesserte Wärmeaufnahme des Kühlluftstromes K zur Folge hat. Auf diese Weise kann die Kühlwirkung infolge des Kühlstromes K an der Statoraussenfläche 28 und der Antriebsvorrichtung 2 insgesamt deutlich verbessert werden.

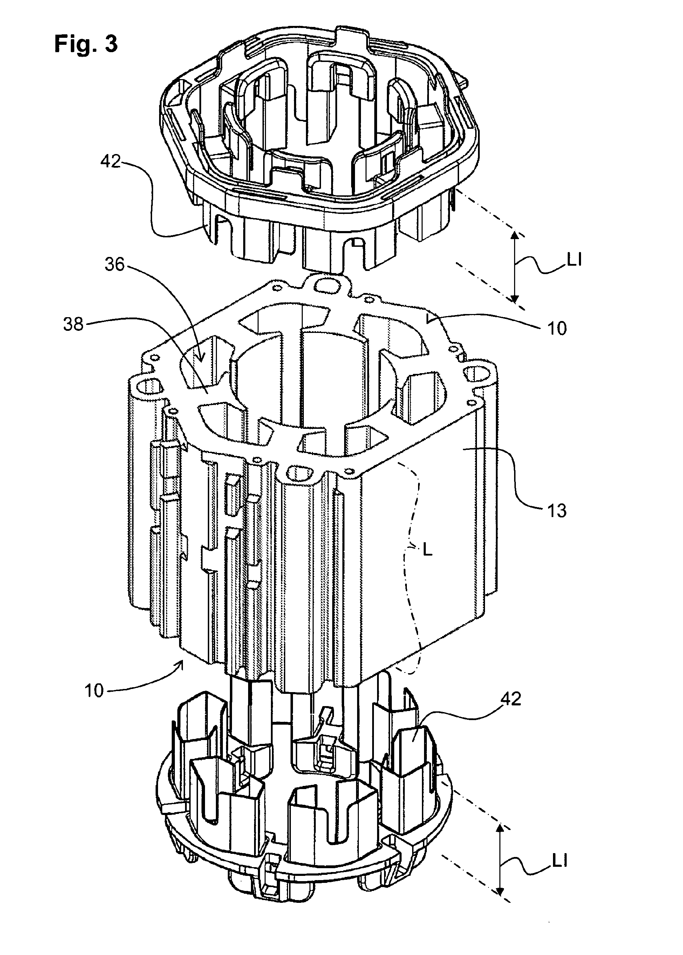

Wie aus Fig. 2 und 3 zu entnehmen ist, weist das Statorpaket 13 mehrere Wicklungsnuten 36 zur Ausbildung von Stegen 38 auf, an denen eine Statorwicklung 40 angebracht ist. Hierbei ist zwischen den Stegen 38 und der Statorwicklung 40 eine Nutisolation 42 vorgesehen.

Wie aus Fig. 3 zu entnehmen ist, ist die Nutisolation 42 durch zwei deckelartige Elemente gebildet, die an beiden Statorenden 10 in die Wicklungsnuten 36 des Statorpaketes 13 eingesteckt werden. Die beidseitig in die Wicklungsnuten 36 hineinragenden Abschnitte der Nutisolation 42 weisen dabei jeweils eine axiale Erstreckung LI auf, die zusammen genommen höchstens die halbe axiale Erstreckung gegenüber der axialen Längserstreckung L des Statorpaketes 13 beziehungsweise der jeweiligen Wicklungsnut 36 ergeben. Durch die hierdurch vorgehaltenen isolationsfreien Bereiche kann trotz der Nutisolation 42 eine gute Wärmeübertragung von der Statorwicklung 40 auf das Statorpaket 13 gewährleistet werden.

Ferner ist es hierbei möglich, Zwischenräume, die auf Grund der Nutisolation 42 zwischen der Statorwicklung 40 und dem Statorpaket 13 entstehen, wenigstens bereichsweise mit einem wärmeleitfähigen Material auszugiessen (nicht dargestellt), um die Wärmeübertragung von der Statorwicklung 40 auf das Statorpaket 13 weiter zu verbessern.

## Patentansprüche

1. Handgeführtes Elektrogerät, das eine Antriebsvorrichtung (2) aufweist,
mit einem in einem Antriebsgehäuse (6) untergebrachten Stator (8), der zwischen zwei Statorenden (10), an denen jeweils ein Abschlusselement (12) angeordnet ist, eine Längserstreckung (L) aufweist, und
einem wenigstens einen Permanentmagnet (16) aufweisenden Rotor (14), der in einem durch den Stator (8) und die Abschlusselemente (12) begrenzten Aufnahmeraum (20) angeordnet und über eine Antriebsachse (18) an den Abschlusselementen (12) drehgelagert ist,
einem Lüfter (22), der mit der Antriebsachse (18) bewegungsgekoppelt ist und mittels dem zwischen einer Gehäuseinnenfläche (26) des Antriebsgehäuses (6) und einer Statoraussenfläche (28) des Stators (8) ein Kühlluftstrom (K) von einem der Statorenden (10) zu dem jeweils anderen Statorende (10) erzeugbar ist,
wobei an der Statoraussenfläche (28) mehrere Prallflächen (32) ausgebildet sind, die sich quer zur Längserstreckung (L) des Stators (8) erstrecken,
**dadurch gekennzeichnet, dass** an der Statoraussenfläche (28) mehrere Längsrippen (30) vorgesehen sind, die sich parallel zur Längserstreckung (L) des Stators (8) erstrecken, und die Prallflächen (32) durch Ausnehmungen (34) an den Längsrippen (30) gebildet sind.

2. Handgeführtes Elektrogerät nach Anspruch 1, **dadurch gekennzeichnet, dass** mehrere benachbarte Längsrippen (30) vorgesehen sind, an denen die Prallflächen (32) bezüglich der Längserstreckung (L) des Stators (8) zueinander versetzt angeordnet sind.

3. Handgeführtes Elektrogerät nach einem der Ansprüche 1 oder 2, **dadurch gekennzeichnet, dass** der Stator mehrere Wicklungsnuten (36) mit jeweils einer darin angeordneten Nutisolation (42) aufweist, die sich höchstens über die halbe Längserstreckung (L) des Stators (8) erstreckt.

4. Handgeführtes Elektrogerät nach einem der Ansprüche 1 bis 3, **dadurch gekennzeichnet, dass** der Stator (8) eine auf mehreren Stegen (38) gehaltene Statorwicklung (40) aufweist, wobei durch die Statorwicklung (40) und die Stege (38) gebildete Zwischenräume bereichsweise mit einem wärmeleitfähigen Material ausgegossen sind.

## Claims

1. Electric hand tool having a drive device (2), comprising
a stator (8) accommodated in a drive housing (6) and having a longitudinal extent (L) between two stator ends (10) at each of which an end element (12) is arranged, and
a rotor (14) having at least one permanent magnet (16), arranged in a receiving space (20) delimited by the stator (8) and the end elements (12) and rotatably supported on the end elements (12) via a drive axle (18), and
a fan (22) coupled to move with the drive axle (18) and by means of which a cooling air stream (K) can be generated from one stator end (10) to the other stator end (10) between an inner surface (26) of the drive housing (6) and an outer surface (28) of the stator (8),
the outer surface (28) of the stator being provided with a plurality of deflecting surfaces (32) extending transversely to the longitudinal extent (L) of the stator (8),
**characterised in that** the outer surface (28) of the stator is provided with a plurality of longitudinal ribs (30) extending parallel to the longitudinal extent (L) of the stator (8) and that the deflecting surfaces (32) are formed by recesses (34) on the longitudinal ribs (30).

2. Electric hand tool according to claim 1, **characterised by** a plurality of adjacent longitudinal ribs (30) on which the deflecting surfaces (32) are arranged in such a manner that they are offset relative to one another with respect to the longitudinal extent (L) of the stator (8).

3. Electric hand tool according to either of claims 1 or 2, **characterised in that** the stator has a plurality of winding slots (36) each comprising insulation (42) arranged in the slots and extending at most over half the longitudinal extent (L) of the stator (8).

4. Electric hand tool according to one of claims 1 to 3, **characterised in that** the stator (8) has a stator winding (40) held on a plurality of webs (38), intermediate spaces formed by the stator winding (40) and the webs (38) being filled in some areas with a thermally conductive material.

## Revendications

1. Outil électrique à main incluant un dispositif d'entraînement (2), comportant :
un stator (8) placé dans un boîtier d'entraînement (6), lequel stator a une étendue longitudinale (L) entre deux extrémités de stator (10) sur chacune desquelles est agencé un élément terminal (12), et
un rotor (14) muni d'au moins un aimant permanent (16), lequel rotor est agencé dans un espace de réception (20) délimité par le stator (8) et les éléments terminaux (12) et est supporté en rotation sur les éléments terminaux (12) par un arbre d'entraînement (18),
un ventilateur (22) dont le mouvement est couplé à celui de l'arbre d'entraînement (18) et au moyen duquel un écoulement d'air de refroidissement (K) peut être généré à partir de l'une des extrémités de stator (10) jusqu'à l'autre extrémité de stator (10) entre une surface intérieure de boîtier (26) du boîtier d'entraînement (6) et une surface extérieure de stator (28) du stator (8),
dans lequel plusieurs surfaces déflectrices (32) sont formées sur la surface extérieure de stator (28), lesquelles surfaces déflectrices s'étendent transversalement à l'étendue longitudinale (L) du stator (8),
**caractérisé en ce que** plusieurs nervures longitudinales (30) sont prévues sur la surface extérieure de stator (28), lesquelles nervures s'étendent parallèlement à l'étendue longitudinale (L) du stator (8), et les surfaces déflectrices (32) sont formées par des évidements (34) sur les nervures longitudinales (30).

2. Outil électrique à main selon la revendication 1, **caractérisé en ce que** plusieurs nervures longitudinales adjacentes (30) sont prévues, nervures sur lesquelles les surfaces déflectrices (32) sont agencées décalées les unes des autres par rapport à l'étendue longitudinale (L) du stator (8).

3. Outil électrique à main selon l'une quelconque des revendications 1 ou 2, **caractérisé en ce que** le stator comporte plusieurs rainures d'enroulement (36) avec respectivement une isolation de rainure (42) agencée à l'intérieur de celles-ci, laquelle isolation s'étend au plus sur la moitié de l'étendue longitudinale (L) du stator (8).

4. Outil électrique à main selon l'une quelconque des revendications 1 à 3, **caractérisé en ce que** le stator (8) comporte un enroulement de stator (40) supporté par plusieurs barrettes (38), dans lequel des espaces intermédiaires formés par l'enroulement de stator (40) et les barrettes (38) sont, dans certaines zones, remplis d'un matériau thermo-conducteur.
